# EUROPÄISCHE PATENTSCHRIFT

(11) **EP 0 745 454 B1**
(45) Veröffentlichungstag und Bekanntmachung des Hinweises auf die Patenterteilung: **16.06.1999**
(21) Anmeldenummer: 96105502.7
(22) Anmeldetag: 06.04.1996
(51) Int. Cl.: B23Q 11/10

(54) **Verfahren zum Aufbereiten von Metallspänen und/oder Metallstaub**
Method for processing metal chips and/or metal dust
Procédé pour le traitement des copeaux métalliques et/ou poudre métallique

(30) Priorität: 27.05.1995 DE 19519475
(43) Veröffentlichungstag der Anmeldung: 04.12.1996
(73) Patentinhaber: FILTERWERK MANN & HUMMEL GMBH, 71631 Ludwigsburg (DE)
(72) Erfinder: Bremer, Karl-Günther, 52249 Eschweiler (DE); Lambrighs, Pierre, 3511 Hasselt (BE)
(74) Vertreter: Voth, Gerhard, Dipl.-Ing.

(56) Entgegenhaltungen:
- VDI Z, Bd. 130, Nr. 2, Februar 1988, DUSSELDORF DE, Seiten 62-67, XP002008270 MUNK: "SPÄNEENTÖLUNG UND KÜHLSCHMIERSTOFFAUFBEREITUNG IM PRODUKTIONSPROZESS"
- SOVIET ENGINEERING RESEARCH (STANKI I INSTRUMENTY & VESTNIK MASHINOSTROENIA MASHINOSTROCNIE)., Bd. 7, Nr. 1, Januar 1987, NEW YORK US, Seiten 44-46, XP002008271 TIKHONTSOV ET AL: "WATER-BASED COOLANT MANAGEMENT SYSTEMS"

## Beschreibung

Die Erfindung betrifft ein Verfahren zum Aufbereiten von Metallspänen und/oder Metallstaub nach dem Oberbegriff des Anspruchs 1 sowie eine Vorrichtung zur Durchführung des Verfahrens nach Anspruch 4.

Es ist bekannt, bei der Trockenbearbeitung von metallischen Werkstoffen, insbesondere bei der Bearbeitung von Graugußteilen den dort anfallenden Metallstaub abzusaugen, mit Feuchtigkeit zu versetzen und einem Sammelbehälter zuzuführen. Dieser sog. Graugußschlamm wird anschließend über eine geeignete Kratzereinrichtung aus dem Sammelbehälter ausgetragen. Der bei dieser Naßabsaugung anfallende Schlamm muß entsorgt werden, wobei die Entsorgung der Mischung Graugußstaub/Flüssigkeit sehr hohe Kosten verursacht. Selbstverständlich würde die Möglichkeit bestehen, mittels einer thermischen Trocknungseinrichtung die Feuchtigkeit aus dem Gemisch zu entfernen. Diese Trocknung ist jedoch sehr energieaufwendig. Außerdem ist eine Rückkühlung der verdampften Feuchtigkeit erforderlich.

Der Erfindung liegt deshalb die Aufgabe zugrunde, ein Verfahren sowie eine Vorrichtung zu schaffen, mit welchem unter minimalem Einsatz von Energie eine sehr gute Trocknung der Metallspäne bzw. des Metallstaubs erreicht wird.

Diese Aufgabe wird durch die Merkmale der Ansprüche 1 und 4 gelöst.

Der wesentliche Vorteil der Erfindung liegt darin, daß die Entfeuchtung in einem System erfolgt, das aus einem Pufferbehälter und einer Entfeuchtungseinrichtung besteht, wobei der Metallschlamm der Entfeuchtungseinrichtung aus dem Pufferbehälter in dosierten Mengen zugeführt wird und dort eine Entfeuchtung mittels Druckluft erfolgt. Die Feuchtigkeit bzw. Flüssigkeit gelangt wieder zurück in den Sammelbehälter. Damit entsteht ein geschlossener Kreislauf, aus dem keine Feuchtigkeit in die Umwelt entweicht. Die entfeuchteten Metallspäne können unmittelbar dem Recycling zugeführt werden.

Gemäß einer Weiterbildung der Erfindung erfolgt die Kontrolle des Entfeuchtungsgrades über einen Druckwächter bzw. über einen Feuchtesensor. Der Druckwächter sensiert den Druck der zugeführten Druckluft auf der Anschlämmseite. Ein Abfallen des Drucks zeigt an, daß der Entfeuchtungsvorgang abgeschlossen ist.

Eine vorteilhafte Vorrichtung zur Durchführung des Verfahrens ist in Anspruch 4 beschrieben. Diese Vorrichtung ist aus einfachen Komponenten aufgebaut, wobei die Steuerung der gesamten Einrichtung automatisch erfolgt. Hierzu sind geeignete Sensoren sowohl im Pufferbehälter als auch in der Entfeuchtungseinrichtung vorgesehen.

An die Entfeuchtungseinrichtung können mehrere Pufferbehälter bzw. mehrere Zuführeinheiten angeschlossen werden. Die Steuerung sorgt dafür, daß der Pufferbehälter, dessen Füllstand ein Maximum anzeigt, über die Entfeuchtungseinrichtung entleert wird.

Die Erfindung wird nachfolgend anhand eines Ausführungsbeispiels näher erläutert. Es zeigt:
- Figur 1: die schematische Darstellung einer Einrichtung zur Durchführung des Verfahrens zum Aufbereiten von Metallspänen bzw. Metallstaub,
- Figur 2: die Detaildarstellung einer Entfeuchtungseinrichtung.

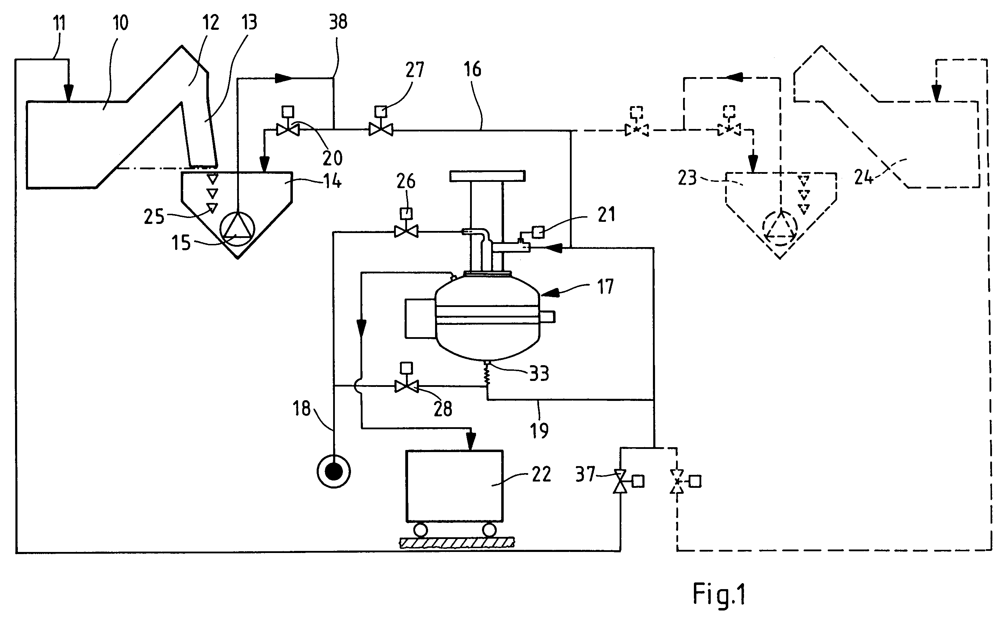

Die Einrichtung gemäß Figur 1 zeigt einen Absetzkratzertank 10. Dieses ist ein Behälter mit einer am Boden und an der Rampe verlaufenden Kratzereinrichtung. Diesem Behälter wird eine Mischung aus Flüssigkeit und Metallstaub bzw. Metallspänen zugeführt.

Bei der Bearbeitung von Grauguß entsteht Metallstaub, der zum besseren Transport mit Feuchtigkeit angereichert wird. Dadurch bildet sich ein Metallschlamm. Dieser gelangt über ein Rohrleitungssystem in den Absetzkratzertank. Der Schlamm wird über den Austragshals 12 nach oben befördert und durch die Austragöffnung 13 einem Pufferbehälter 14 zugeführt.

Von diesem Pufferbehälter 14 gelangt der Metallschlamm mittels einer Pumpe 15 über Ventil 27 und die Rohrleitung 16 zu der Entfeuchtungseinrichtung 17. Die Entfeuchtungseinrichtung wird mit einer bestimmten Menge an Metallschlamm gefüllt und anschließend über die Druckluftleitung 18 mit Druckluft beaufschlagt. Dadurch erfolgt ein Entfeuchten des Schlamms, d. h. die Feuchtigkeit wird nach unten über die Leitung 19 abgeleitet und gelangt über das Ventil 37 und über die Leitung 11 wieder zurück in den Absetzkratzertank.

Während des Trockenblasens im Entfeuchtungsdom kann zwecks Vermeidung einer Sedimentation der Metallpartikel im Pufferbehälter 14 über eine Rohrleitung 38 und über das Ventil 20 mit der Pumpe 15 über diesen kleinen Kreislauf gepumpt werden.

An der Entfeuchtungseinrichtung ist ein Druckwächter 21 angeschlossen, welcher ein Signal erzeugt, sobald der Entfeuchtungsvorgang abgeschlossen ist. Beim Einleiten des Entfeuchtungsvorgangs zeigt der Druckwächter den Maximaldruck an. Während des Entfeuchtungsvorgangs sinkt der Druck auf der Schlammeintragsseite ab, wobei in der Endphase der Entfeuchtung ein merklicher Druckabfall auftritt. Dies ist gleichzeitig das Signal für den Entleerungsvorgang der Entfeuchtungseinrichtung.

Der untere Teil des Behälters wird nach unten weggeklappt. Der darauf befindliche getrocknete Schlamm, d. h. die entfeuchteten Metallspäne bzw. der entfeuchtete Metallstaub, gelangt in einen Auffangbehälter 22. Nach dem Schließen der Entfeuchtungseinrichtung kann die nächste Charge eingefüllt werden.

Auf der rechten Seite der Figur 1 ist in einer gestrichelten Darstellung ein zweiter Pufferbehälter 23 sowie ein Absetzkratzertank 24 dargestellt. Auch der dort zugeführte Metallschlamm kann in der Entfeuchtungseinrichtung verarbeitet werden.

Die Feuchtigkeit aus Leitung 19 wird in den Absetzkratzertank 10 zurückgeführt.

In dem Pufferbehälter sind Niveauwächter 25 vorgesehen. Das Signal dieser Niveauwächter wird einer Schalteinrichtung zugeführt.

Es sind weiterhin Ventile 26 und 28 für die Druckluft zum Rückspülen der Entfeuchtungseinrichtung vorgesehen. Sämtliche Ventile sind elektrisch ansteuerbar. Damit kann die Einrichtung vollautomatisch betrieben werden und ermöglicht somit eine wirtschaftliche Arbeitsweise.

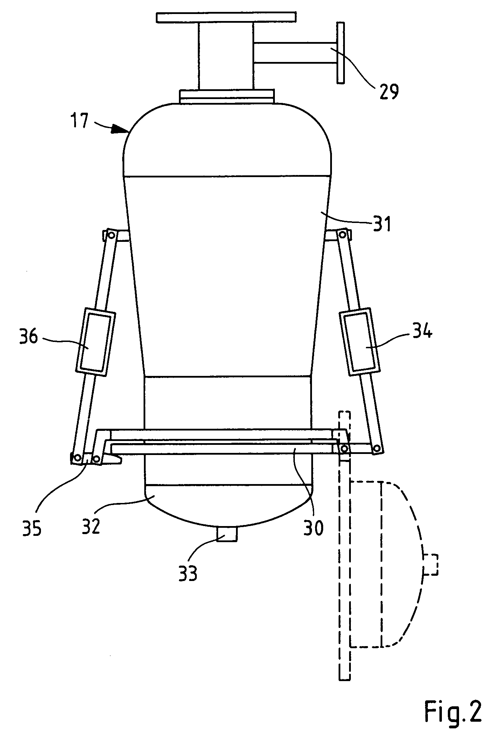

Die Figur 2 zeigt in einer Detaildarstellung die Entfeuchtungseinrichtung 17. Diese Entfeuchtungseinrichtung, auch Trockendom genannt, weist im oberen Bereich eine Öffnung 29 auf, durch welche der zu trocknende Schlamm zugeführt wird.

Im unteren Bereich des Trockendoms befindet sich eine Spaltfilterplatte 30. Diese trennt den oberen Bereich 31, in dem sich der zugeführte Schlamm befindet, von dem unteren Bereich 32. Der untere Bereich 32 ist der Flüssigkeitssammelraum. Über eine Öffnung 33 wird die Flüssigkeit der Leitung 19 (Fig. 1) zugeführt.

Die Spaltfilterplatte 30 mit dem unteren Bereich 32 ist als Bodenklappe ausgestaltet und kann mittels des Pneumatikzylinders 34 bewegt werden. Zum Verschließen der Bodenklappe ist ein Verschlußmechanismus 35 vorgesehen, der ebenfalls über Pneumatikzylinder 36 betätigt wird.

Wie bereits erwähnt, wird nach dem Befüllen der Entfeuchtungseinrichtung diese mit Druckluft im oberen Bereich 31 beaufschlagt. Dadurch wird die Feuchtigkeit ausgetrieben und sammelt sich im unteren Bereich bzw. wird dort ausgetragen. Nach dem Entfeuchten des Materials wird der untere Bereich geöffnet und der auf der Spaltfilterplatte 30 gebildete Filterkuchen entfernt.

### Bezugszeichenliste

- 10: Absetzkratzertank
- 11: Rohrleitung
- 12: Austragshals
- 13: Austragsöffnung
- 14: Pufferbehälter
- 15: Pumpe
- 16: Rohrleitung
- 17: Entfeuchtungseinrichtung
- 18: Druckluft
- 19: Leitung
- 20: Ventil
- 21: Druckwächter
- 22: Auffangbehälter
- 23: Pufferbehälter
- 24: Absetzkratzertank
- 25: Niveauwächter
- 26: Ventil
- 27: Ventil
- 28: Ventil
- 29: Öffnung
- 30: Spaltfilterplatte
- 31: Bereich
- 32: Bereich
- 33: Öffnung
- 34: Pneumatikzylinder
- 35: Verschlußmechanismus
- 36: Pneumatikzylinder
- 37: Ventil
- 38: Rohrleitung

## Patentansprüche

1. Verfahren zum Aufbereiten von Metallspänen und/oder Metallstaub aus der spanabhebenden Bearbeitung, wobei das Metall in einem ersten Verfahrensschritt befeuchtet wird und über ein Fördersystem einem Sammelbehälter, insbesondere einem Absetzkratzertank (10), zugeführt wird, dadurch gekennzeichnet, daß das aufzubereitende Material aus diesem Sammelbehälter insbesondere über eine Kratzereinrichtung einem Pufferbehälter (14) zugeführt wird und aus diesem Pufferbehälter dosiert einer Entfeuchtungseinrichtung (17) zugeführt wird, wobei in dieser Entfeuchtungseinrichtung mittels Druckluft die Feuchtigkeit entfernt und in den Sammelbehälter (10) zurückgeführt wird und das entfeuchtete Metall anschließend in einen Auffangbehälter (22) gelangt.

2. Verfahren nach Anspruch 1, dadurch gekennzeichnet, daß mittels eines Druckwächters (21) und/oder eines Feuchtesensors an der Entfeuchtungseinrichtung (17) ein Signal erzeugt wird zur Überwachung des Entfeuchtungsgrades.

3. Verfahren nach einem der vorherigen Ansprüche, dadurch gekennzeichnet, daß an der Entfeuchtungseinrichtung (17) wenigstens ein weiterer Pufferbehälter (23) angeschlossen werden kann, welchem die aus einem Sammelbehälter (24) ausgetragenen, mit Flüssigkeit versetzten Metallspäne und/oder Metallstaub zugeführt werden.

4. Einrichtung zur Durchführung des Verfahrens nach Anspruch 1 mit einem Pufferbehälter (14), welchem mit Flüssigkeit versetzte Metallspäne und/oder Metallstaub zugeführt wird, einer Pumpe (15), die den im Pufferbehälter (14) befindlichen Schlamm in eine Leitung einspeist, wobei die Leitung mit einer Entfeuchtungseinrichtung (17) verbunden ist und die Entfeuchtungseinrichtung aus einer Filtereinrichtung und einem Druckkessel besteht.

5. Einrichtung nach Anspruch 4, dadurch gekennzeichnet, daß zum Entnehmen des entfeuchteten Metalls die Entfeuchtungseinrichtung (17) sich öffen läßt und das Öffnen der Entfeuchtungseinrichtung ein Entleeren bewirkt.

## Claims

1. Method of processing metal cuttings and/or metallic dust from the metal-cutting process, wherein the metal is wetted in a first method step and supplied to a storage tank, more especially a scraper-type settling tank (10), via a conveyor system, characterised in that the material to be processed is supplied from this storage tank to a buffer tank (14), more especially via a scraper means, and is supplied in a metered manner from this buffer tank to a moisture extractor (17), the moisture in this moisture extractor being removed by means of compressed air and being conducted back into the storage tank (10), and the dehumidified metal subsequently enters a collecting vessel (22).

2. Method according to claim 1, characterised in that a signal is generated to the moisture extractor (17) by means of a pressure monitor (21) and/or a moisture sensor in order to monitor the degree of moisture extraction.

3. Method according to one of the preceding claims, characterised in that at least one additional buffer tank (23) can be connected to the moisture extractor (17), to which tank are supplied the metal cuttings and/or metallic dust which are discharged from a storage tank (24) and are mixed with liquid.

4. Apparatus for accomplishing the method according to claim 1, having a buffer tank (14), to which is supplied metal cuttings and/or metallic dust which are mixed with liquid, a pump (15) which feeds the sludge situated in the buffer tank (14) into a line, wherein the line is connected to a moisture extractor (17), and the moisture extractor comprises a filter arrangement and a pressure chamber.

5. Apparatus according to claim 4, characterized in that the moisture extractor (17) can be opened for the removal of the dehydrated metal, and the opening of the moisture extractor instigates emptying.

## Revendications

1. Procédé pour le traitement de copeaux métalliques et/ou de poudre métallique, issus d'un usinage opérant avec un enlèvement de copeaux, dans une première étape de procédé le métal étant humidifié et amené, par l'intermédiaire d'un système de transport, à un récipient collecteur, en particulier un réservoir à décantation et raclage (10),
caractérisé en ce que
le matériau à traiter issu de ce récipient collecteur est amené, en particulier par un dispositif de raclage, à un réservoir tampon (14) et est amené à partir de ce réservoir tampon, de façon dosée, à un dispositif de déshumidification (17) où, dans ce dispositif de déshumidification, au moyen d'air comprimé, l'humidité est éliminée et retournée dans le récipient collecteur (10), et le métal déshumidifié arrivant ensuite dans un récipient de captage (22).

2. Procédé selon la revendication 1,
caractérisé en ce que
au moyen d'un organe de surveillance de pression (21) et/ou d'un capteur d'humidité placé sur le dispositif de déshumidification (17), on génère un signal qui est destiné à surveiller le degré de déshumidification.

3. Procédé selon l'une des revendications précédentes,
caractérisé en ce qu'
au dispositif de déshumidification (17) peut être raccordé au moins un autre réservoir tampon (23), auquel sont amenés les copeaux métalliques et/ou la poudre métallique extraits d'un récipient collecteur (24), mélangés avec du liquide.

4. Dispositif de mise en oeuvre du procédé selon la revendication 1,
comportant un réservoir tampon (14), auquel des copeaux métalliques et/ou de la poudre métallique, mélangés avec du liquide, est/sont amenés à une pompe (15) qui injecte dans une conduite la boue se trouvant dans le réservoir tampon (14), la conduite étant reliée à un dispositif de déshumidification (17), et le dispositif de déshumidification étant constitué d'un dispositif de filtrage et d'un autoclave.

5. Dispositif selon la revendication 4,
caractérisé en ce que
pour prélever le métal déshumidifié, le dispositif de déshumidification (17) est ouvert et l'ouverture du dispositif de déshumidification provoque un vidage.
